# EUROPÄISCHE PATENTANMELDUNG

(11) **EP 2 626 828 A1**
(43) Veröffentlichungstag der Anmeldung: **14.08.2013**
(21) Anmeldenummer: 13154169.0
(22) Anmeldetag: 06.02.2013
(51) Int. Cl.: G06Q 30/02, G06Q 50/32

(54) **Verfahren zur Kommunikation in einem Kommunikationsnetzwerk**

(30) Priorität: 07.02.2012 DE 102012002186
(71) Anmelder: Tribe Technologies GmbH, 60439 Frankfurt am Main (DE)
(72) Erfinder: Reddehase, Axel, 60439 Frankfurt am Main (DE)
(74) Vertreter: KEIL & SCHAAFHAUSEN Patentanwälte

(57) **Zusammenfassung**

Die Erfindung betrifft ein Verfahren zur Kommunikation eines Telefondienstanbieters (10) mit dem Mitarbeiter (21) eines Unternehmens (20) in einem Kommunikationsnetzwerk mit einem Datennetz (1) und einem Telefonnetz (2) sowie einer Datenverbindung (27) von der Datenverarbeitungseinrichtung (23) des ersten Mitarbeiters (21) über das Datennetz (1) und einer Telefonverbindung (24) von dem Telefon (22) des ersten Mitarbeiter (21) über das Telefonnetz (2) jeweils zu dem Telefondienstanbieter (10). Um die Auslagerung von Telefonie-Dienstleistungen an Telefondienstanbieter ohne aufwendige CTI-Integration zu ermöglichen, werden die folgenden Schritte ausgeführt:
a) Anfordern einer individuellen Identifizierungsinformation mittels der Datenverarbeitungseinrichtung (23) durch den ersten Mitarbeiter (21) über die Datenverbindung (27), die zuvor eingerichtet wurde, bei dem Telefondienstanbieter (10),
b) Übersenden der angeforderten individuellen Identifizierungsinformation von dem Telefondienstanbieter (10) an die Datenverarbeitungseinrichtung (23) des ersten Mitarbeiters (21) über die Datenverbindung (27),
c) gegebenenfalls nun Einrichten einer Telefonverbindung (24) von dem Telefon (22) des ersten Mitarbeiters (21) über das Telefonnetz (2) mit dem Telefondienstanbieter(10), falls eine solche Telefonverbindung (24) noch nicht existiert,
d) Übermittlung der von dem Telefondienstanbieter (10) zuvor übersandten individuellen Identifizierungsinformation von dem Telefon (22) des ersten Mitarbeiters (21) über die bestehende Telefonverbindung (24) zurück an den Telefondienstanbieter (10) und
e) Empfangen der über die Telefonverbindung (24) zurück übersandten Identifizierungsinformation beim Telefondienstanbieter (10) und Zuordnung der Telefonverbindung (24) mit dem ersten Mitarbeiter (21) zu der Datenverbindung (27) mit dem ersten Mitarbeiter (21) anhand der zurück übersandten Identifizierungsinformation durch den Telefondienstanbieter (10).

Die Erfindung betrifft ferner eine entsprechende Datenverarbeitungseinheit bzw. ein entsprechendes Computerprogrammprodukt.

## Beschreibung

Die vorliegende Erfindung betrifft ein Verfahren zur Kommunikation eines Telefondienstanbieters mit dem Mitarbeiter eines Unternehmens in einem Kommunikationsnetzwerk mit einem Datennetz und einem Telefonnetz sowie eine Datenverarbeitungseinheit und ein Computerprogrammprodukt hierfür.

Heutzutage werden im Bereich des Marketings von werbetreibenden Unternehmen Werbung und Informationen an Kunden (Teilnehmer, Verbraucher) in zunehmendem Maße elektronisch oder via Telefon übermittelt. Nach neueren gesetzlichen Regelungen ist es erforderlich, dass derartige Werbekontaktaufnahmen mit einem Teilnehmer vorher von diesem Teilnehmer explizit genehmigt werden müssen. Diese Einwilligungserklärung wird auch als Opt-in bezeichnet und bezieht sich auf die Übermittlung von Werbung und Informationen über einen bestimmten Kommunikationsweg, beispielsweise via E-Mail, Telefon oder SMS. Kann eine solche explizite Einwilligung zur Werbekontaktaufnahme über einen bestimmten Kommunikationsweg von dem Teilnehmer nicht über ein geeignetes Verfahren erhalten bzw. nachgewiesen werden, so werden die ohne diese Erlaubnis durchgeführten Werbekontaktaufnahmen als unzulässig erachtet.

Um die Einwilligung eines Kunden in die Zusendung von E-Mails an eine bestimmte E-Mail-Adresse zu erhalten und zu dokumentieren wurde beispielsweise das sogenannte "Double Opt-in"-Verfahren entwickelt. Hierbei wird seitens des Kunden eine E-Mail Adresse angegeben, an die das werbetreibende Unternehmen automatisiert eine E-Mail mit der Bitte um Bestätigung seiner Einwilligung zur Kontaktaufnahme über diese Email-Adresse schickt. Falls von dem Teilnehmer die Kontaktaufnahme nicht erwünscht ist oder die Kontaktaufnahme missbräuchlich erfolgte, kann der Teilnehmer sich dadurch schützen, dass er auf die Bestätigungsanfrage per E-Mail nicht reagiert. Seine Einwilligung zur Kontaktaufnahme über diese Emailadresse ist erst dann wirksam, wenn die zurückgesandte E-Mail-Bestätigung von dem Teilnehmer beim Werbetreibenden eingetroffen ist. Dieses Verfahren ist jedoch wenig flexibel und langwierig, da der Werbetreibende auf die Rückbestätigung durch den Teilnehmer warten muss.

Es ist ferner ein Verfahren zur Verifizierung einer Einwilligung zur telefonischen Kontaktaufnahme bekannt. Hierbei erhält der Teilnehmer einen automatisierten Rückruf an die von ihm zur Kontaktaufnahme angegebene Telefonnummer. Erst nach Eingabe einer vorgegebenen Tastenkombination wird die Telefonnummer explizit zur werblichen Nutzung für Unternehmer freigegeben. Ein ähnliches Verfahren kann im Zusammenhang mit Mobilfunk eingesetzt werden. Hierbei erhält der Mobilfunkteilnehmer eine SMS mit einem Bestätigungscode, den er später in ein Onlineformular eintragen muss. So geht der Werbetreibende sicher, dass der Teilnehmer die eigene bzw. eine korrekte Telefonnummer in seiner Einwilligung angegeben hat.

Zur Einholung und Absicherung von Einwilligungserklärungen zur Kontaktaufnahme über bestimmte Kanäle kristallisiert sich in zunehmendem Maße heraus, dass das Einholen von Opt-Ins in einem mit Audio-Mitschnitt aufgezeichneten Telefongespräch eines Mitarbeiters des werbetreibenden Unternehmens mit dem Teilnehmer mit anschließender schriftlicher Bestätigung ein praktikables Verfahren für viele Unternehmen darstellt (vorausgesetzt, der Teilnehmer hat der Aufnahme zugestimmt).

Im Zusammenhang mit der Generierung, Speicherung und Verwaltung dieser Einwilligungserklärungen zur werblichen Kontaktaufnahme möchten Telefondienstanbieter nun Dienstleistungen anbieten. Dafür muss der Telefondienstanbieter in der Lage sein, den Telefonverbindungen werbetreibender Unternehmen Informationen zuzuordnen, die an den Arbeitsplätzen der Mitarbeiter der werbetreibenden Unternehmen zur Verfügung stehen.

Die technische Infrastruktur der Telefondienstanbieter erlaubt den Aufbau einer Telefonverbindung eines Teilnehmers mit einem werbetreibenden Unternehmen oder umgekehrt die Weiterleitung eines Anrufs eines Mitarbeiters des werbetreibenden Unternehmens an einen Teilnehmer. Welcher Mitarbeiter des werbetreibenden Unternehmens ein bestimmtes Telefonat führt und welche Informationen mit dem Telefonat festgehalten werden, ist aber in der technischen Infrastruktur der Telefondienstanbieter nicht ersichtlich. Dies liegt daran, dass ein Anruf bei einem werbetreibenden Unternehmen zwar über die Telefonleitungen aus dem Telefonnetz eingeht, die interne Zuweisung eines Telefonates an einen bestimmten Mitarbeiter bzw. dessen Telefon in der Regel aber durch die Telefonanlage des Unternehmens geschieht, von der keine Informationen an den Telefondienstanbieter übermittelt werden. Auch im umgekehrten Fall, wenn Anrufe seitens eines Mitarbeiters eines werbetreibenden Unternehmens über die interne Telefonanlage in die Telefonleitungen des Telefonnetzes geleitet werden, übermittelt die Telefonanlage an den Telefondienstanbieter keine Details über die interne Zuordnung zu einem bestimmten Telefon bzw. den agierenden Mitarbeiter.

Die in den werbetreibenden Unternehmen verwendeten Telefonanlagen weisen unter Umständen sogenannte CTI-Schnittstellen auf (CTI = Rechner-Telefonie-Integration), welche die Verbindung zwischen der oder den beim Unternehmen aus dem Telefonnetz eingehenden Telefonleitungen und dem zugehörigen Telefon des Mitarbeiters herstellen. Mittels einer derartigen CTI-Schnittstelle können softwareseitig Anrufinformationen ausgelesen, Anrufe angenommen und ausgelöst, Konferenzschaltungen aufgebaut oder Anrufumleitungen vorgenommen werden. Derartige CTI-Schnittstellen können unter Umständen mit einer Datenverbindung zum Telefondienstanbieter verknüpft werden und so zur Übermittlung von Informationen über die Telefonate im werbetreibenden Unternehmen an den Telefondienstanbieter herangezogen werden. Eine derartige Integration ist allerdings an sich bereits sehr aufwendig und nur mit hohem Zeit- und Ressourceneinsatz realisierbar. Für werbetreibende Unternehmen oder Abteilungen von werbetreibenden Unternehmen, die in der Telefonie-Infrastruktur noch nicht über CTI-Umgebungen verfügen, kann ein derartiger Lösungsansatz daher nicht verfolgt werden.

Die Aufgabe der vorliegenden Erfindung besteht demnach darin, ein Verfahren anzugeben, mit dem eine Kommunikation eines Mitarbeiters eines Unternehmens mit einem Telefondienstanbieter in einem Kommunikationsnetzwerk derart ermöglicht wird, dass ohne aufwendige CTI-Integration Telefonie-Dienstleistungen an einen Telefondienstanbieter ausgelagert werden können. Die Aufgabe besteht ferner darin, eine entsprechende Datenverarbeitungseinheit bzw. ein entsprechendes Computerprogrammprodukt zu schaffen.

Die obige Aufgabe wird durch das Verfahren mit den Merkmalen des Anspruchs 1 gelöst.

Bei dem erfindungsgemäßen Verfahren zur Kommunikation eines (ersten) Telefondienstanbieters mit einem ersten Mitarbeiter eines Unternehmens existieren insbesondere eine Datenverbindung von der Datenverarbeitungseinrichtung des ersten Mitarbeiters über das Datennetz und eine Telefonverbindung von dem Telefon des ersten Mitarbeiters über das Telefonnetz jeweils zu dem Telefondienstanbieter. Ferner werden die folgenden Schritte, vorzugsweise in der angegebenen Reihenfolge, ausgeführt:
a) Anfordern einer individuellen Identifizierungsinformation mittels der Datenverarbeitungseinrichtung durch den ersten Mitarbeiter über die Datenverbindung, die zuvor eingerichtet wurde, bei dem Telefondienstanbieter,
b) Übersenden der angeforderten individuellen Identifizierungsinformation von dem Telefondienstanbieter an die Datenverarbeitungseinrichtung des ersten Mitarbeiters über die Datenverbindung,
c) gegebenenfalls nun Einrichten einer Telefonverbindung von dem Telefon des ersten Mitarbeiters über das Telefonnetz mit dem Telefondienstanbieter, falls eine solche Telefonverbindung noch nicht existiert,
   wobei spätestens nach Schritt c) die Telefonverbindung und die Datenverbindung mit dem Telefondienstanbieter gleichzeitig bestehen und während der sich anschließenden Schritte d) und e) bestehen bleiben,
d) Übermittlung der von dem Telefondienstanbieter zuvor übersandten individuellen Identifizierungsinformation von dem Telefon des ersten Mitarbeiters über die bestehende Telefonverbindung zurück an den Telefondienstanbieter und
e) Empfangen der über die Telefonverbindung zurück übersandten Identifizierungsinformation beim Telefondienstanbieter und Zuordnung der Telefonverbindung mit dem ersten Mitarbeiter zu der Datenverbindung mit dem ersten Mitarbeiter anhand der zurück übersandten Identifizierungsinformation durch den Telefondienstanbieter. Vorzugsweise bleiben Telefonverbindung und Datenverbindung mit dem Telefondienstanbieter auch während des sich anschließenden Telefonats mit einem Teilnehmer über die Telefonverbindung weiter gleichzeitig bestehen.

Hierbei umfasst die vorliegende Erfindung mit dem Begriff Telefonnetz das analoge Telefonnetz, das digitale Telefonnetz (z.B. ISDN), das Funknetz (z.B. GSM) und das paketübermittelnde Datennetz (z.B. VoIP) und dergleichen. Hinsichtlich einer Datenverbindung über das Datennetz werden durch die vorliegende Erfindung alle Verbindungen eingeschlossen, welche die Übermittlung von digitalen Daten von einer Datenverarbeitungseinrichtung (z.B. Computer) zu einer anderen Datenverarbeitungseinrichtung umfasst. Eine solche Datenverbindung wird beispielsweise über das Internet hergestellt. Die beiden Verbindungen (Telefonverbindung und Datenverbindung) können beim Mitarbeiter und beim Teilnehmer auch jeweils ausgehend von einem einzigen Gerät hergestellt sein, beispielsweise von einem Smart-Phone.

Bei dem Telefondienstanbieter ist ebenfalls eine Datenverarbeitungseinrichtung im Einsatz, welche die über die Datenverbindung vom Mitarbeiter übertragenen Dateninformationen empfängt. Vorzugsweise empfängt und/oder verarbeitet diese Datenverarbeitungseinrichtung bei dem Telefondienstanbieter auch die über die jeweilige Telefonverbindung übertragenen Sprachinformationen des Mitarbeiters und/oder des Teilnehmers. Hierfür kann eine sogenannte Telefonkarte und/oder andere/weitere Telefonie-Hardware und/oder Telefonie-Software, die jeweils in der Datenverarbeitungseinrichtung des Telefondienstanbieters vorgesehen ist, dienen.

Die Telefonverbindung von einem Mitarbeiter eines Unternehmens mit dem Telefondienstanbieter kann erfindungsgemäß insbesondere einen Teil der Verbindung mit einem (externen) Teilnehmer darstellen. In diesem Fall beinhaltet die Telefonverbindung die Verbindung zwischen Teilnehmer und dem Mitarbeiter des Unternehmens über den Telefondienstanbieter. Ebenso kann das Gespräch insbesondere mittels einer Weiterleitung an einen anderen Mitarbeiter dieses oder eines anderen Unternehmens übergeben werden. Im letzten Fall müssen die erfindungsgemäßen Identifizierungsschritte zwischen dem Telefondienstanbieter und dem Mitarbeiter, der das Gespräch weiterführt, erneut durchgeführt werden, welche die korrekte Zuordnung der Datenverbindung dieses Mitarbeiters zu der Telefonverbindung mit dem Telefondienstanbieter sicherstellen.

Im Rahmen der vorliegenden Erfindung werden auch Call-Center oder andere Dienstleistungsunternehmen, die extern Telefonmarketingaktionen für Unternehmen durchführen, als Unternehmen verstanden.

Gegebenenfalls erfolgt die Telefonverbindung zu einem weiteren Mitarbeiter des Unternehmens oder zu einem (externen) Teilnehmer über weitere Telefondienstanbieter. Auch die Telefonverbindung von dem tätigen Mitarbeiter des Unternehmens zu dem (ersten) Telefondienstanbieter kann über weitere Telefondienstanbieter erfolgen.

Der Vorteil des erfindungsgemäßen Verfahrens besteht nun insbesondere darin, dass aufgrund der zunächst über die Datenverbindung übertragenen individuellen Identifizierungsinformation auch eine Identifizierung und Zuordnung der parallel bestehenden Telefonverbindung zwischen dem tätigen Mitarbeiter des Unternehmens und dem (ersten) Telefondienstanbieter erfolgen kann. Hierdurch ist es möglich, auch außerhalb eines Unternehmens unabhängig von der in dem Unternehmen vorliegenden Telefonie-Infrastruktur bei Telefondienstanbietern CTI-Dienstleistungen anzubieten. Beispielsweise können den Sprachinformationen, die der Telefondienstanbieter von dem Mitarbeiter bzw. von dem mit dem Mitarbeiter verbundenen Teilnehmer empfängt, weitere Daten zugeordnet werden, beispielsweise Daten zu dem Telefonat (z.B. Zeit und Datum des Telefonats) oder Daten zu dem (externen) Teilnehmer, mit dem der Mitarbeiter über den Telefondienstanbieter telefoniert. Derartige Teilnehmerdaten sind beispielsweise persönlichen Daten des Teilnehmers, z.B. Geburtsdatum, Adresse, Kunden- und Vertragsnummern oder Informationen zum Einkaufsverhalten des Teilnehmers.

Die mit dem erfindungsgemäßen Verfahren erreichte Zuordnung einer bestehenden Datenverbindung zu einer gleichzeitig bestehenden Telefonverbindung ermöglicht es dem Mitarbeiter zudem, sein Telefonat mit dem Teilnehmer über den (ersten) Telefondienstanbieter mittels der Datenverbindung zu steuern. Beispielsweise könnten vom Mitarbeiter des Unternehmens Recordingdienstleistungen des Telefondienstanbieters zur Aufnahme von Sprachinformationen per Mausklick ein- oder ausgeschaltet oder die Weiterleitung des Anrufs initiiert werden oder dergl., ohne dass im Unternehmen eine CTI-Umgebung vorhanden sein muss.

Das vorliegende erfindungsgemäße Verfahren ist besonders für den noch weit verbreiteten Fall geeignet, in dem die Telefonverbindung zumindest teilweise über das analoge Telefonnetz verläuft. Insbesondere in diesem Fall ist bei dem herkömmlichen Verfahren eine eindeutige Zuordnung zwischen Telefon des Mitarbeiters und Telefondienstanbieter oft nicht möglich. Das Telefonieren über das analoge Telefonnetz ist auch im Zeitalter der mobilen Kommunikation nicht verschwunden und wird sicherlich noch eine längere Zeit weiterbestehen. Daher beinhaltet das erfindungsgemäße Verfahren für Telefondienstanbieter eine neue Möglichkeit, auch für das Telefonieren über "Festnetz" moderne Telefonieverfahren bereitzustellen.

Hinsichtlich der Identifizierungsinformation wird in der vorliegenden Erfindung vorausgesetzt, dass die von dem Telefondienstanbieter übersandte individuelle Identifizierungsinformation einzigartig für die konkrete Verbindung des Telefondienstanbieters mit dem Mitarbeiter eines Unternehmens ist. Nur dann kann die Zuordnung der Telefonverbindung zu der Datenverbindung mit dem Mitarbeiter eindeutig erfolgen. Für die Identifizierungsinformation können beliebige Daten verwendet werden. Es wird jedoch nicht ausgeschlossen, dass eine individuelle Identifizierungsinformation nach Verstreichen eines bestimmten, vorgegebenen Zeitraums wieder für eine (andere) Verbindung mit einem anderen Mitarbeiter verwendet wird. Gleiche individuelle Identifizierungsinformationen dürfen daher nicht innerhalb eines bestimmten, vorgegebenen Zeitraumes für verschiedene Verbindungen verwendet werden.

In einem besonders bevorzugten Ausführungsbeispiel ist die individuelle Identifizierungsinformation als Identifikator ausgebildet. Identifikatoren sind elektronische Kennungen oder Merkmale, die zur Identifizierung herangezogen werden können.

In der vorliegenden Erfindung werden als Identifikatoren insbesondere Bezeichner verstanden, welche über die Datenverbindung elektronisch übermittelt werden können. Ein solcher Identifikator kann über unterschiedliche informatische Verfahren, beispielsweise in Form einer Zahlen- und/oder Buchstaben- und/oder Bit-Kombination, ermittelt und über die Datenverbindung von dem Telefondienstanbieter zum Mitarbeiter übertragen werden. Diese Zahlen- und/oder Buchstaben- und/oder Bit-Kombination oder ein anderer Identifikator wird dann über die Telefonverbindung, beispielsweise auf der Basis des Mehrfrequenzwahlverfahrens (MFV, auch als Tonwahlverfahren bezeichnet) durch Eingabe über die Tastatur des Telefons als DTMF-Töne zurück an den Telefondienstanbieter übersandt. Das MFV ist das heute überwiegend genutzte Verfahren zur Übermittlung der Rufnummer oder anderer Nummern- und/oder Buchstabencodes im Telefonnetz oder über eine Telefonanlage.

Für die Generierung eines Identifikators können beispielsweise Verfahren verwendet werden, welche aus der Softwareentwicklung für die Generierung von Universally Unique Identifiers (UUIDs) oder aus der medizinischen Forschung für die Anonymisierung von Patientendaten bekannt sind. Ein solches Verfahren kann für die vorliegende Anwendung jedoch hinsichtlich der Länge der Identifikatoren angepasst werden, beispielsweise auf der Basis der Anzahl der Telefonleitungen des Unternehmens des tätigen Mitarbeiters. Es können jedoch auch andere, z.B. einfachere Verfahren, mit denen die benötigte Identifikatoren-Länge erzeugt werden kann, verwendet werden.

In einem bevorzugten Ausführungsbeispiel wird ein erster Teilnehmer über den Telefondienstanbieter mit einem ersten Mitarbeiter eines Unternehmens über eine Telefonverbindung derart verbunden, dass der erste Mitarbeiter mit dem ersten Teilnehmer über den Telefondienstanbieter zumindest Sprachinformationen austauschen kann. Zusätzlich erfolgt ein Austausch von Dateninformationen über eine Datenverbindung zwischen dem ersten Mitarbeiter des Unternehmens und dem Telefondienstanbieter. Dieses Ausführungsbeispiel umfasst den Regelfall der Verwendung der vorliegenden Erfindung, bei dem eine Kontaktaufnahme des ersten Teilnehmers mit dem ersten Mitarbeiter des Unternehmens erfolgt oder umgekehrt. Durch das erfindungsgemäße Verfahren kann der erste Mitarbeiter des Unternehmens über die jeweilige Datenverbindung zum Telefondienstanbieter Dienstleistungen des Telefondienstanbieters steuern. Der erste Mitarbeiter des Unternehmens kann etwa die von dem Telefondienstanbieter angebotene Dienstleistung der Audio-Aufzeichnung des Telefonates über die Datenverbindung mit dem Telefondienstleister auslösen. Ebenso könnten andere CTI-Funktionalitäten wie etwa den Aufbau von Gesprächen mit zweiten Teilnehmern, eine Weiterleitung des Gesprächs an zweite Mitarbeiter oder eine Konferenzschaltung über den Telefondienstanbieter durch den ersten Mitarbeiter des Unternehmens initiiert werden. Der Telefondienstanbieter kann dem ersten Mitarbeiter über die Datenverbindung auch eine Rückmeldung über die von ihm ausgelöste Dienstleistung zukommen lassen. Derartige Rückmeldungen könnten etwa die Qualität der Audio-Aufzeichnungen, den Status einer Gesprächsweiterleitung oder Ähnliches betreffen.

In einer Weiterbildung der vorliegenden Erfindung kann der Telefondienstanbieter mit mindestens einem zweiten Teilnehmer eine zweite Telefonverbindung herstellen und die Telefonverbindung des ersten Mitarbeiters über den Telefondienstanbieter mit dem ersten Teilnehmer auf den zweiten Teilnehmer umschalten. Hierdurch gelingt auf einfache Weise und durch Minimierung von Aufwand die Durchführung einer Weitervermittlung. Die Umschaltung der Telefonverbindung ist derart zu verstehen, dass vor dem Umschalten der erste Teilnehmer über den Telefondienstanbieter mit dem ersten Mitarbeiter des Unternehmens verbunden ist. Nach dem Umschalten ist der zweite Teilnehmer telefonisch mit dem ersten Mitarbeiter über den Telefondienstanbieter verbunden. Die Zuordnung von Datenverbindung und Telefonverbindung des ersten Mitarbeiters mit dem Telefondienstanbieter braucht in diesem Fall nach dem Umschalten nicht erneuert werden

Bei der Weiterleitung eines Gesprächs stellt der Telefondienstanbieter aufgrund entsprechender Steuerung durch den ersten Mitarbeiter des Unternehmens mit mindestens einem zweiten Mitarbeiter des ersten Unternehmens oder eines zweiten Unternehmens eine zweite Telefonverbindung her, auf die die erste Telefonverbindung des ersten Teilnehmers mit dem Telefondienstanbieter, ebenfalls gesteuert durch den ersten Mitarbeiter, umgelegt (umgeschaltet) werden kann. Dies ist so zu verstehen, dass das Gespräch des ersten Teilnehmers mit dem ersten Mitarbeiter über den Telefondienstanbieter umgeschaltet wird zu einer Telefonverbindung dieses Teilnehmers mit dem zweiten Mitarbeiter, jeweils über den Telefondienstanbieter. Sollen auch durch den zweiten Mitarbeiter Dienstleistungen des Telefondienstanbieters in Anspruch genommen werden, so muss wiederum eine korrekte Zuordnung der zweiten Telefonverbindung zu einer Datenverbindung zwischen Telefondienstanbieter und dem zweiten Mitarbeiter mittels des erfindungsgemäßen Identifizierungsverfahrens erfolgen, wobei nach erfolgter Übergabe die zweite Telefonverbindung und die Datenverbindung zwischen dem zweiten Mitarbeiter und dem Telefondienstanbieter gleichzeitig bestehen. Hierdurch kann etwa ein Telefonat mit einem Teilnehmer beispielsweise zunächst von einem Mitarbeiter eines Unternehmens entgegengenommen werden und dann an einen Mitarbeiter eines externen Call-Centers zum Abschließen des Telefonats weitergegeben werden. Dies ist von Vorteil, da der Mitarbeiter des Unternehmens, der zuerst im Gespräch war, nach der Weitergabe des Gesprächs an ein Call-Center zeitnah wieder für das Kerngeschäft des Unternehmens zur Verfügung steht.

In einer Weiterbildung der Erfindung erfolgt vor oder nach der Zuordnung der Telefonverbindung zur Datenverbindung eine Identifikation des ersten Teilnehmers und/oder des zweiten Teilnehmers, vorzugsweise über eine Datenverbindung. Eine solche Identifikation kann dadurch erfolgen, dass über die Datenverbindung beispielsweise Name und Adresse des ersten Teilnehmers oder des zweiten Teilnehmers an den Telefondienstanbieter übermittelt werden. Alternativ oder zusätzlich kann auch eine dem jeweiligen Teilnehmer zugeordnete, persönliche Identifikationsnummer (PIN) oder ein anderer persönlicher Identifikator zur Identifikation des Nutzers dienen. Eine solche PIN kann beispielsweise über die Datenverbindung oder aber auch über die Telefonverbindung an den Telefondienstanbieter übermittelt werden, um die Identifikation des Nutzers zu bewirken. Hierfür muss zwischen dem Telefondienstanbieter und dem ersten Teilnehmer und/oder dem zweiten Teilnehmer gegebenenfalls ebenfalls eine Datenverbindung bestehen. Gegebenenfalls wurde eine Zuordnung von Datenverbindung und Telefonverbindung mittels des erfindungsgemäßen Verfahrens auch zwischen Telefondienstanbieter und dem jeweiligen Teilnehmer durchgeführt.

Von Vorteil ist ferner, wenn die Dienstleistungen des Telefondienstanbieters durch den ersten Mitarbeiter und/oder den zweiten Mitarbeiter des ersten Unternehmens oder des zweiten Unternehmens (wie oben bereits beschrieben) und/oder durch den ersten Teilnehmer und/oder durch den zweiten Teilnehmer, sofern der jeweilige Teilnehmer auch eine Datenverbindung zu dem Telefondienstleister unterhält, über die jeweilige Datenverbindung zum Telefondienstanbieter gesteuert werden. Hierdurch können die Dienstleistungen des Telefondienstanbieters sowohl durch den ersten Mitarbeiter und/oder den zweiten Mitarbeiter als auch durch den ersten Teilnehmer und/oder den zweiten Teilnehmer genutzt werden.

In einem weiteren bevorzugten Ausführungsbeispiel wird mindestens ein Teil eines über die Telefonverbindung übermittelten Gesprächs des ersten Teilnehmers und/oder des zweiten Teilnehmers mit dem ersten Mitarbeiter oder dem zweiten Mitarbeiter aufgezeichnet und vorzugsweise der Datenverbindung mit dem jeweiligen Mitarbeiter bzw. mindestens einer, über diese Datenverbindung übermittelten Dateninformation zugeordnet. Derartige Dateninformationen sind beispielsweise ein Start- oder ein Stoppsignal für den Beginn und das Ende der Gesprächsaufzeichnung, persönliche Daten oder eine Kunden- oder Vertragsnummer des mit dem Mitarbeiter telefonierenden Teilnehmers. Hierdurch können auf einfache Weise beim Telefondienstanbieter Gespräche oder Gesprächsteile, beispielsweise im Rahmen eines Opt-in-Verfahrens, aufgenommen, mit verschiedenen Daten, beispielsweise Name und Adresse des Teilnehmers verknüpft und gegebenenfalls für Nachweiszwecke verbunden mit diesen zusätzlichen Dateninformationen ablegt werden. Aufgrund der Möglichkeit, die Gesprächsaufzeichnungen mit Dateninformationen zu verbinden, können diese Gesprächsinformationen, beispielsweise Opt-in's, beim Telefondienstanbieter gemanagt werden. Das Management kann auch derart erfolgen, dass in regelmäßigen Abständen geprüft wird, welchen Status die Opt-ins der Teilnehmer aufweisen und ob Opt-ins fehlen oder verfallen sind. Das Fehlen oder Verfallen der Opt-ins kann dem zuständigen Mitarbeiter eines Unternehmens mitgeteilt werden, so dass dieser die Vervollständigung bzw. Erneuerung vornimmt. In einem Beschwerdefall können frühere Gesprächsmitschnitte von Telefonaten mit dem jeweiligen Teilnehmer auf Veranlassung des mit dem Teilnehmer verbundenen Mitarbeiters eines Unternehmens über den Telefondienstanbieter in das laufende Telefonat eingespielt werden.

Die obige Aufgabe wird außerdem mit den oben hinsichtlich des Verfahrens erläuterten Vorteilen durch eine Datenverarbeitungseinheit mit den Merkmalen des Anspruchs 9 sowie ein Computerprogrammprodukt mit den Merkmalen des Anspruchs 10 gelöst.

Insbesondere ist die erfindungsgemäße Datenverarbeitungseinheit zum Einsatz bei einem Telefondienstanbieter zur Kommunikation mit einem ersten Mitarbeiter eines Unternehmens in einem Datennetz und in einem Telefonnetz eingerichtet, wobei eine Datenverbindung von der Datenverarbeitungseinrichtung des ersten Mitarbeiters über das Datennetz und einer Telefonverbindung von dem Telefon des ersten Mitarbeiters über das Telefonnetz jeweils zu der Datenverarbeitungseinheit des Telefondienstanbieters herstellbar ist, wobei die Datenverarbeitungseinheit zur Durchführung der oben erläuterten Verfahren eingerichtet ist.

Ferner ist das erfindungsgemäße Computerprogrammprodukt zur Kommunikation eines Telefondienstanbieters mit einem ersten Mitarbeiter eines Unternehmens in einem Datennetz und in einem Telefonnetz mit Programmcodemitteln zur Ausführung eines Computerprogramms nach dessen Implementierung in einer Datenverarbeitungseinheit vorgesehen, wobei die Programmcodemittel dazu dienen, die oben angegebenen Verfahren nach der Implementierung in der Datenverarbeitungseinheit auszuführen.

Weitere Merkmale, Vorteile und Anwendungsmöglichkeiten der Erfindung ergeben sich auch aus der nachfolgenden Beschreibung eines Ausführungsbeispiels und den Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen schematisch:
- Fig. 1: ein Kommunikationsnetzwerk, in dem das erfindungsgemäße Verfahren stattfindet, und
- Fig. 2: das in Figur 1 gezeigte Kommunikationsnetzwerk mit einer spezifizierten Daten- und Telefonverbindung.

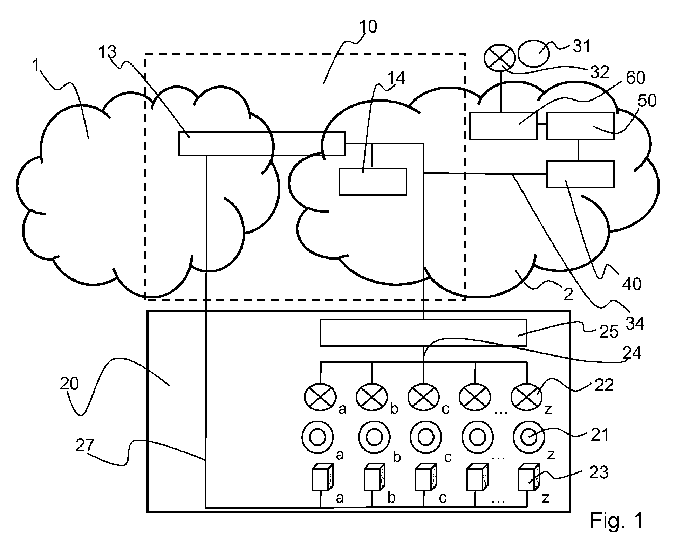

In Figur 1 sind ein Datennetz 1 und ein Telefonnetz 2 abgebildet, welche zusammen das Kommunikationsnetzwerk bilden. Hierbei ist das Datennetz 1 vorzugsweise das Internet, während zum Telefonnetz 2 insbesondere das analoge Telefonnetz, das digitale Telefonnetz sowie das Funknetz und VoIP gehören.

Mit dem Kommunikationsnetzwerk ist ein werbetreibendes Unternehmen oder Call-Center, im Folgenden kurz Unternehmen 20, verbunden, bei dem eine Reihe von Mitarbeitern 21 (Mitarbeiter a, Mitarbeiter b, Mitarbeiter c, ...., Mitarbeiter z) arbeiten. Jeder Mitarbeiter 21 besitzt ein Telefon 22 (Telefon a, Telefon b, Telefon c, ..., Telefon z) sowie eine Datenverarbeitungseinrichtung 23 (Computer a, Computer b, Computer c, ..., Computer z). Jedes Telefon 22 ist über eine Telefonverbindung 24 und die Telefonanlage 25 mit dem Telefonnetz 2 verbunden. Ferner ist auch jeder Computer 23 über eine Datenverbindung 27 mit dem Datennetz 1 verbunden.

In dem Kommunikationsnetzwerk 1, 2 sind eine Reihe von Telefondienstanbietern 10, 40, 50 und 60 tätig, die außerhalb des Systems eines Unternehmens 20 eine Reihe von Dienstleistungen im Bereich der Telefonie und Datenverarbeitung anbieten.

Bestandteil des Kommunikationsnetzwerks kann noch mindestens ein Teilnehmer 31 sein, welcher ebenfalls über ein Telefon 32 und eine Telefonverbindung 34 mit dem Telefonnetz 2 verbunden ist. Zusätzlich kann auch der Teilnehmer 31 eine (nicht dargestellten) Datenverarbeitungseinrichtung besitzen, die eine Verbindung mit dem Datennetz 1 aufweist. Auch kann zwischen Telefon 32 des Teilnehmers 31 und Telefonnetz 2 eine Telefonanlage dazwischen geschaltet sein.

Soll nun eine Telefonmarketingaktion durch einen Mitarbeiter 21 des Unternehmens 20 durchgeführt werden, so baut zunächst der Mitarbeiter 21 (beispielsweise Mitarbeiter b) über die Datenverarbeitungseinrichtung 23 (beispielsweise Computer b) eine Datenverbindung 27 zur Datenverarbeitungseinrichtung 13, insbesondere zu der mit dem erfindungsgemäßen Verfahren ausgerüsteten, in dieser enthaltenen erfindungsgemäßen Datenverarbeitungseinheit des Telefondienstanbieters 10 auf. Diese Datenverarbeitungseinrichtung 13 des Telefondienstanbieters 10 ist beispielsweise ein Webserver mit Webapplikationen; sie kann jedoch auch ein Computersystem bestehend aus einer Vielzahl von Servern und Applikationen umfassen. Ferner beginnt der Mitarbeiter 21 (beispielsweise Mitarbeiter b) ein Telefonat über die Telefonanlage 25 über die Datenverarbeitungseinrichtung 13 des Telefondienstanbieters 10 mit Telefoniehard- und - software mit dem Teilnehmer 31. Entsprechend wird eine Telefonverbindung 24 mit dem Telefondienstanbieter und eine weitere Telefonverbindung 34 mit dem Teilnehmer 31 hergestellt. Die Telefonverbindung 24 und die Datenverbindung 27 des Mitarbeiters 21 mit dem Telefondienstanbieter 10 bestehen daher ab diesem Zeitpunkt gleichzeitig.

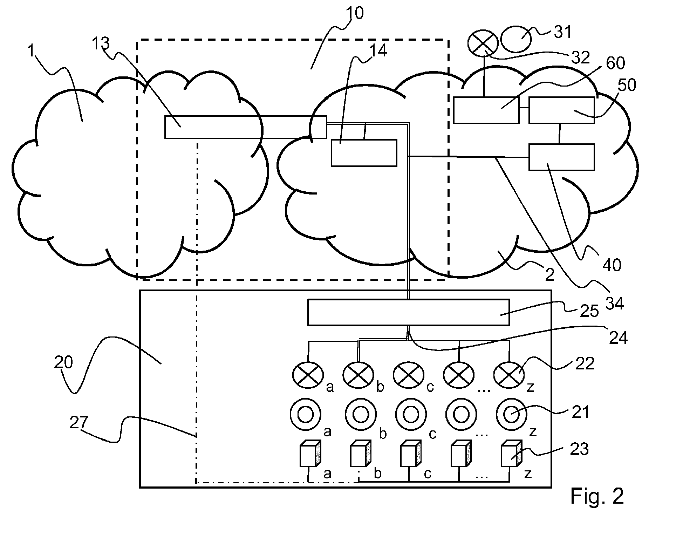

In Figur 2 sind die jeweiligen Verbindungen des ausgewählten Mitarbeiters b 21 mit dem Telefondienstleister 10 gesondert gekennzeichnet, und zwar die Telefonverbindung 24 mit einer Doppellinie und die Datenverbindung 27 mit einer strichpunktierten Linie.

Der Telefondienstanbieter 10 weiß aufgrund der Vorschaltung der Telefonanlage 25 auf der Seite des Unternehmens 20 nicht, über welches Telefon 22 der Mitarbeiter 21 mit ihm kommuniziert. Deshalb fordert der Mitarbeiter 21 des Unternehmens 20 den Telefondienstanbieter 10 über die Datenverbindung 27 zunächst auf, ihm eine individuelle Identifizierungsinformation zu übermitteln. Hierbei erfolgt die Anforderung der Identifizierungsinformation beispielsweise über eine Befehlsschaltfläche der Plattform des Telefondienstanbieters 10. Die Datenverarbeitungseinrichtung 13 des Telefondienstanbieters 10 generiert die individuelle Identifizierungsinformation, beispielsweise eine Zahlenkombination, und übermittelt diese über die Datenverbindung 27 zurück an die Datenverarbeitungseinrichtung 23 des Mitarbeiters 21. Dort wird die individuelle Identifizierungsinformation, z.B. die Zahlenkombination, dem Mitarbeiter 21 z.B. auf einem Bildschirm angezeigt.

Die von dem Telefondienstanbieter 10 an den Mitarbeiter 21 zurück übermittelte Zahlenkombination wird dann von dem Mitarbeiter 21 des Unternehmens 20 über die bereits bestehende Telefonverbindung 24 zu der Datenverarbeitungseinrichtung 13 des Telefondienstanbieters übertragen. Hierfür gibt der Mitarbeiter die Zahlenkombination beispielsweise über die Tastatur seines Telefons 22, das für das Mehrfrequenzwahlverfahren ausgerüstet ist, ein. Die Datenverarbeitungseinrichtung 13 kann nun eine Zuordnung der bestehenden Telefonverbindung 24 zwischen dem Telefon 22 des Mitarbeiters 21 (beispielsweise Mitarbeiter b) und der Datenverbindung 27 von der Datenverarbeitungseinrichtung 23 (beispielsweise Computer b) des Mitarbeiters 21 zu der Datenverarbeitungseinrichtung 13 des Telefondienstanbieters 10 herstellen.

Nach der Zuordnung der individuellen Telefonverbindung 24 und Datenverbindung 27 des Mitarbeiters 21 (z.B. Mitarbeiter b) zu dem Telefondienstanbieter 10 können nun durch den Mitarbeiter 21 die Dienstleistungen des Telefondienstanbieters 10 über die Datenverbindung 27 gesteuert werden. Beispielsweise kann der Mitarbeiter 21, wenn er über den Telefondienstanbieter 10 mit dem Teilnehmer 31, beispielsweise über weitere Telefondienstanbieter 40, 50 und 60 telefoniert, per Mausklick über die Datenverbindung 27 eine Aufnahmeeinrichtung 14 bei dem Telefondienstanbieter 10 betätigen, d.h. an- oder ausschalten. Die Aufnahmeeinrichtung 14 ist mit der Datenverarbeitungseinrichtung 13 verbunden oder in die Datenverarbeitungseinrichtung 13 integriert sowie (in beiden Fällen) über die Datenverarbeitungseinrichtung 13 und über die Datenverbindung 27 mit der Datenverarbeitungseinrichtung 23 des Mitarbeiters 21 verbunden. Ferner besitzt die Aufnahmeeinrichtung 14 über die Datenverarbeitungseinrichtung 13 eine Verbindung zu den Telefonverbindungen 24, 34 mit dem Mitarbeiter 21 und dem Teilnehmer 31. Der Mitarbeiter 21 kann also während des Gesprächs des Mitarbeiters 21 mit dem Teilnehmer 31 eine Aufnahme eines Teils dieses Gesprächs per Mausklick an seiner Datenverarbeitungseinrichtung 23 beginnen und auch wieder beenden. Auch die Weiterleitung eines Gesprächs oder die Einrichtung einer Telefonkonferenz durch den Telefondienstanbieter 10 kann über die Datenverbindung 27 und die Datenverarbeitungseinrichtung 23 beispielsweise per Mausklick durch den Mitarbeiter 21 veranlasst werden.

Das durch die Aufnahmeeinrichtung 14 aufgezeichnete Gespräch kann dann in der Datenverarbeitungseinrichtung 13 mit weiteren Daten zu dem Gespräch, z.B. dem Datum des Gesprächs, des Teilnehmers 31, beispielsweise dem Namen des Teilnehmers 31 und dessen Kunden- oder Vertragsnummer, und/oder des Mitarbeiters 21, z.B. dem Namen des Mitarbeiters, verknüpft und in einem Speicher der Datenverarbeitungseinrichtung 13 bei dem Telefondienstanbieter 10, beispielsweise in eine entsprechend eingerichtete Datenbank, abgelegt werden.

In der Datenverarbeitungseinrichtung 13 des Telefondienstanbieters 10 kann dann ein Managementsystem arbeiten, das die so getätigten Gesprächsaufzeichnungen verwaltet.

Derartige Gesprächsaufzeichnungen können beispielsweise im Rahmen des Opt-in-Verfahrens erzeugt und verwendet werden. In diesem Zusammenhang kann ein Managementsystem beispielsweise den Mitarbeitern 21 in Bezug auf den Opt-In-Status für verschiedene Medien (Telefon, SMS, Fax), über fehlende Opt-Ins oder über den Verfall von Opt-Ins informieren und weitere Schritte, z.B. rechtzeitige die Einholung einer Teilnehmer-Bestätigung, einleiten. Ferner ist es möglich, im Rahmen eines Telefonats des Mitarbeiters 21 mit einem Teilnehmer 31 Aufzeichnungen in das Telefonat einzuspielen.

Die von dem Telefondienstanbieter 10 gesammelten Daten, insbesondere Gesprächsaufzeichnungen, können auch dem Unternehmen 20 zur weiteren Verwendung übermittelt werden.

Mit dem erfindungsgemäßen Verfahren wird es für einen Telefondienstanbieter 10 erstmals möglich, CTI-Funktionalitäten außerhalb einer bei einem Unternehmen 20 vorliegenden Telefoninfrastruktur unabhängig von dieser darzustellen.

### Bezugszeichenliste

- 1: Datennetz
- 2: Telefonnetz
- 10: Telefondienstanbieter
- 13: Datenverarbeitungseinrichtung des Telefondienstanbieters 10
- 14: Aufnahmeeinrichtung
- 20: Unternehmen
- 21: Mitarbeiter
- 22: Telefon des Mitarbeiters 21
- 23: Datenverarbeitungseinrichtung des Mitarbeiters 21
- 24: Telefonverbindung
- 25: Telefonanlage
- 27: Datenverbindung
- 31: Teilnehmer
- 32: Telefon des Teilnehmers 31
- 34: Telefonverbindung
- 40: Telefondienstanbieter
- 50: Telefondienstanbieter
- 60: Telefondienstanbieter

## Patentansprüche

1. Verfahren zur Kommunikation eines Telefondienstanbieters (10) mit dem Mitarbeiter (21) eines Unternehmens (20) in einem Kommunikationsnetzwerk mit einem Datennetz (1) und einem Telefonnetz (2) sowie einer Datenverbindung (27) von der Datenverarbeitungseinrichtung (23) des ersten Mitarbeiters (21) über das Datennetz (1) und einer Telefonverbindung (24) von dem Telefon (22) des ersten Mitarbeiter (21) über das Telefonnetz (2) jeweils zu dem Telefondienstanbieter (10), mit den folgenden Schritten:
a) Anfordern einer individuellen Identifizierungsinformation mittels der Datenverarbeitungseinrichtung (23) durch den ersten Mitarbeiter (21) über die Datenverbindung (27), die zuvor eingerichtet wurde, bei dem Telefondienstanbieter (10),
b) Übersenden der angeforderten individuellen Identifizierungsinformation von dem Telefondienstanbieter (10) an die Datenverarbeitungseinrichtung (23) des ersten Mitarbeiters (21) über die Datenverbindung (27),
c) gegebenenfalls nun Einrichten einer Telefonverbindung (24) von dem Telefon (22) des ersten Mitarbeiters (21) über das Telefonnetz (2) mit dem Telefondienstanbieter(10), falls eine solche Telefonverbindung (24) noch nicht existiert,
d) Übermittlung der von dem Telefondienstanbieter (10) zuvor übersandten individuellen Identifizierungsinformation von dem Telefon (22) des ersten Mitarbeiters (21) über die bestehende Telefonverbindung (24) zurück an den Telefondienstanbieter (10) und
e) Empfangen der über die Telefonverbindung (24) zurück übersandten Identifizierungsinformation beim Telefondienstanbieter (10) und Zuordnung der Telefonverbindung (24) mit dem ersten Mitarbeiter (21) zu der Datenverbindung (27) mit dem ersten Mitarbeiter (21) anhand der zurück übersandten Identifizierungsinformation durch den Telefondienstanbieter (10).

2. Verfahren nach Anspruch 1, **dadurch gekennzeichnet, dass** die individuelle Identifizierungsinformation ein Identifikator ist.

3. Verfahren nach einem der vorhergehenden Ansprüche, **dadurch gekennzeichnet, dass** der Telefondienstanbieter (10) mit einem ersten Teilnehmer (31) zumindest über eine erste Telefonverbindung (34) derart verbunden wird, dass der erste Mitarbeiter (21) mit dem ersten Teilnehmer (31) über den Telefondienstanbieter (10) zumindest Sprachinformationen austauschen kann.

4. Verfahren nach Anspruch 3, **dadurch gekennzeichnet, dass** der Telefondienstanbieter (10) mit mindestens einem zweiten Teilnehmer eine zweite Telefonverbindung herstellt und die Telefonverbindung (24) des ersten Mitarbeiters (21) über den Telefondienstanbieter (10) mit dem ersten Teilnehmer (31) auf den zweiten Teilnehmer umschaltet.

5. Verfahren nach Anspruch 3 oder 4, **dadurch gekennzeichnet, dass** der Telefondienstanbieter (10) mit mindestens einem zweiten Mitarbeiter des ersten Unternehmens (20) oder eines zweiten Unternehmens eine zweite Telefonverbindung herstellt und die erste Telefonverbindung (34) des ersten Teilnehmers (31) mit dem Telefondienstanbieter (10) auf die zweite Telefonverbindung umschaltet.

6. Verfahren nach einem der vorhergehenden Ansprüche, **dadurch gekennzeichnet, dass** vor oder nach der Zuordnung der Telefonverbindung (24) zur Datenverbindung (27) eine Identifikation des ersten Teilnehmers und/oder des zweiten Teilnehmers, vorzugsweise über eine Datenverbindung (27), erfolgt.

7. Verfahren nach einem der vorhergehenden Ansprüche, **dadurch gekennzeichnet, dass** die Dienstleistungen des Telefondienstanbieters (10) durch den ersten Mitarbeiter (21) und/oder den zweiten Mitarbeiter des ersten Unternehmens (20) oder des zweiten Unternehmens und/oder den ersten Teilnehmer (31) und/oder durch den zweiten Teilnehmer über die jeweilige Datenverbindung (27) zum Telefondienstanbieter (10) gesteuert werden.

8. Verfahren nach einem der vorhergehenden Ansprüche, **dadurch gekennzeichnet, dass** mindestens ein Teil eines über die Telefonverbindung (24) übermittelten Gesprächs des ersten Teilnehmers (31) oder des zweiten Teilnehmers mit dem ersten Mitarbeiter (21) oder dem zweiten Mitarbeiter aufgezeichnet und der Datenverbindung (27) mit dem jeweiligen Mitarbeiter (21) und/oder mindestens einer, über diese Datenverbindung (27) übermittelten Dateninformationen zugeordnet wird.

9. Datenverarbeitungseinheit zum Einsatz bei einem Telefondienstanbieter (10) zur Kommunikation mit einem ersten Mitarbeiter (21) eines Unternehmens in einem Datennetz (1) und in einem Telefonnetz (2), wobei eine Datenverbindung (27) von der Datenverarbeitungseinrichtung (23) des ersten Mitarbeiters (21) über das Datennetz (1) und einer Telefonverbindung (24) von dem Telefon (22) des ersten Mitarbeiter (21) über das Telefonnetz (2) jeweils zu der Datenverarbeitungseinheit des Telefondienstanbieters (10) herstellbar ist, **dadurch gekennzeichnet, dass** die Datenverarbeitungseinheit zur Durchführung des Verfahrens nach einem der Ansprüche 1 bis 8 eingerichtet ist.

10. Computerprogrammprodukt zur Kommunikation eines Telefondienstanbieters mit einem ersten Mitarbeiter (21) eines Unternehmens in einem Datennetz (1) und in einem Telefonnetz (2) mit Programmcodemitteln zur Ausführung eines Computerprogramms nach dessen Implementierung in einer Datenverarbeitungseinheit, **dadurch gekennzeichnet, dass** die Programmcodemittel dazu vorgesehen sind, nach der Implementierung in der Datenverarbeitungseinheit das Verfahren nach einem der Ansprüche 1 bis 8 auszuführen.
